# EUROPÄISCHE PATENTSCHRIFT

(11) **EP 0 872 534 B1**
(45) Veröffentlichungstag und Bekanntmachung des Hinweises auf die Patenterteilung: **31.10.2001**
(21) Anmeldenummer: 98106566.7
(22) Anmeldetag: 09.04.1998
(51) Int. Cl.: C09K 19/00, C09K 19/38, C09D 5/36, C09B 67/00

(54) **Effektbeschichtungen mit vom Betrachtungswinkel abhängigem Farbeindruck**
Effect coating with viewing angle-dependent perceived color
Revêtement à effets, dont la couleur perçue dépend de l'angle d'observation

(30) Priorität: 17.04.1997 DE 19715995
(43) Veröffentlichungstag der Anmeldung: 21.10.1998
(73) Patentinhaber: Clariant GmbH, 65929 Frankfurt am Main (DE)
(72) Erfinder: Schönfeld, Axel Dr., 65207 Wiesbaden (DE); Dewald, Bernd, 65510 Idstein (DE); Remsperger, Hans-Josef, 65439 Flörsheim (DE)

(56) Entgegenhaltungen:
- DE-A- 19 612 975
- DE-A- 19 620 746
- DE-A- 19 643 277

## Beschreibung

Die Erfindung liegt auf dem Gebiet der cholesterischen Hauptkettenpolymere mit einem brillanten, vom Betrachtungswinkel abhängigen Farbeindruck.

Cholesterische Hauptkettenpolymere können analog nematischer Hauptkettenpolymere hergestellt werden, indem ein zusätzliches chirales Comonomer verwendet wird (US 4,412,059; EP 0 196 785 B1; EP 0 608 991 A1; EP 0 391 368 B1) oder indem nematische Hauptkettenpolymere (LCP) mit zusätzlichen chiralen Comonomeren umgesetzt werden (EP 0 283 273 A2).

Cholesterische Hauptkettenpolymere zeichnen sich durch eine helikale Überstruktur aus. Diese führt zum einen dazu, daß das Material nicht mehr die bei nematischen Flüssigkristallpolymeren übliche Anisotropie der mechanischen Eigenschaften aufweist. Zum anderen zeigt das Material ausgeprägte Farbeffekte (cholesterische Farbe), die auf der selektiven Reflexion an der helikalen Überstruktur beruhen. Die genaue Reflexionsfarbe hängt hierbei vom Betrachtungswinkel und vor allem von der Ganghöhe der Helix ab. Für jeden beliebigen Betrachtungswinkel - zum Beispiel senkrechte Aufsicht auf einen Probekörper - erscheint als Reflexionsfarbe eine Farbe mit einer Wellenlänge, die der Ganghöhe der helikalen Überstruktur entspricht. Dies bedeutet, daß das reflektierte Licht eine um so kürzere Wellenlänge hat, je kürzer die Ganghöhe der Helix ist. Die sich ausbildende Ganghöhe der Helix hängt im wesentlichen von dem Anteil des chiralen Comonomers, der Art des Einbaus in das Polymer, des Polymerisationsgrads und der Struktur des chiralen Comonomers ("helical twisting power") ab.

Die in EP 0 391 368 B1 beschriebenen Hauptkettenpolymere bilden cholesterische Phasen aus und zeigen auch eine cholesterische Farbe. Die Polymere zeichnen sich dadurch aus, daß sie einen hohen Elastizitätsmodulus, eine hohe Zugfestigkeit und eine nur schwach ausgeprägte Anisotropie der mechanischen Eigenschaften besitzen.
Die Polymere weisen ein hohes Molekulargewicht auf. So zeigen alle Anwendungsbeispiele in EP 0 391 368 B1 eine intrinsische Viskosität von 1,1 bis 1,2 dl/g, gemessen in einem Lösemittelgemisch Phenol/Tetrachlorethan zu 60/40 Gew.-% bei 60°C. Weiterhin geht aus den Beispielen hervor, daß mindestens 20 Mol-% an Camphersäure notwendig sind, um eine cholesterische Farbe zu beobachten. Dies wird auch durch Vergleichsbeispiele belegt, die zeigen, daß mit nur 15 Mol-% an Camphersäure eine cholesterische Farbe nicht beobachtet werden kann.
Der hohe notwendige Gehalt an Camphersäure ist jedoch mit dem Nachteil behaftet, daß Camphersäure eine sehr teure Polymerkomponente ist und daß durch deren hohen Anteil im Polymer dessen Schmelzpunkt stark abgesenkt wird.

Die in EP 0 391 368 B1 beschriebenen Polymere sind extrem schwerlöslich. Eine Lösung kann nur in sehr ungebräuchlichen und auch toxischen Lösemittelgemischen wie dem beschriebenen Phenol/Tetrachlorethan (60/40 Gew-%) oder Pentafluorphenol/Hexaflourisopropanol (50/50 Gew-%) erreicht werden. Die Verwendung von Lösemittelgemischen ist mit dem Nachteil behaftet, daß bei einer Lösemittelrückgewinnung sich in der Regel das Mischungsverhältnis verändert.

Für eine Anwendung cholesterischer Polymere, beispielsweise als plättchenförmiges Effektpigment, ist zwar eine hohe Lösemittelresistenz von Vorteil, andererseits wäre die Herstellung von dünnen Plättchen oder Polymerfilmen einfacher, wenn das Polymer aus Lösung verarbeitet werden könnte. Dies bedeutet, daß es für die Herstellung plättchenförmiger Effektpigmente ideal wäre, wenn es Polymere gäbe, die zwar allgemein eine hohe Lösemittelresistenz aufweisen, trotzdem aber in einem Lösemittel verarbeitet werden könnten.

Aufgabe der vorliegenden Erfindung war es, cholesterische Polymere zur Verfügung zu stellen, die den vorstehend genannten Anforderungen gerecht werden.

Es wurde gefunden, daß überraschenderweise cholesterische Polymere mit cholesterischer Farbe, welche sich in N-Methylpyrrolidon lösen, ansonsten aber eine hohe Lösemittelresistenz aufweisen, hergestellt werden können, wenn das Molekulargewicht durch die Verwendung monofunktioneller Monomere oder gezielte Unstöchiometrien limitiert wird. Weiterhin wurde gefunden, daß überraschenderweise nicht mehr als 17 Mol-% Camphersäure notwendig sind, um eine cholesterische Phase auszubilden und cholesterische Farben zu zeigen.

Gegenstand der vorliegenden Erfindung sind cholesterische flüssigkristalline Hauptkettenpolymere, dadurch gekennzeichnet, daß sie mindestens 3 Mol % einer monofunktionellen Verbindung oder eine um mindestens 3 Mol % voneinander abweichende Stöchiometrie in den zur Bildung einer Ester-, Amid- oder Imidbindung befähigten funktionellen Gruppen der das Hauptkettenpolymer bildenden Monomere enthalten, so daß sie in N-Methylpyrrolidon (NMP) löslich sind, und 5 bis 17 Mol-% eines optisch aktiven Camphersäurerests enthalten.
Unter "löslich" soll eine Löslichkeit von mindestens 20 g/l, vorzugsweise von mindestens 50 g/l, insbesondere von mindestens 90 g/l verstanden werden.

Bevorzugt im Sinne der vorliegenden Erfindung sind cholesterische flüssigkristalline Hauptkettenpolymere, bestehend aus
a) 0 bis 95 Mol-% mindestens einer Verbindung aus der Gruppe der aromatischen Hydroxycarbonsäuren, cycloaliphatischen Hydroxycarbonsäuren und aromatischen Aminocarbonsäuren;
b) 0 bis 49,95 Mol-% mindestens einer Verbindung aus der Gruppe der aromatischen Dicarbonsäuren und cycloaliphatischen Dicarbonsäuren;
c) 0 bis 49,95 Mol-% mindestens einer Verbindung aus der Gruppe der aromatischen Diole, cycloaliphatischen Diole, aromatischen Diamine und aromatischen Hydroxyamine;
d) 5 bis 17 Mol-%, vorzugsweise 10 bis 15 Mol-%, an Camphersäure; und
e) 0 bis 25 Mol-%, vorzugsweise 0 bis 15 Mol-%, einer monofunktionellen Verbindung, wobei die Summe 100 Mol-% ergibt.

Bei den stöchiometrischen Verhältnissen der genannten Monomere untereinander ist darauf zu achten, daß die dem Fachmann bekannte Stöchiometrie der funktionellen Gruppen zur Polykondensation unter Ausbildung von Ester-, Imid- und/oder Amidbindungen gewährleistet ist, jedoch unter Berücksichtigung der nachfolgenden Maßgaben. Bei den angegebenen Prozentsätzen ist weiterhin darauf zu achten, daß das Molekulargewicht des Polymers limitiert werden muß. Die Einstellung des Molekulargewichts geschieht vorzugsweise durch die Verwendung von monofunktionellen Komponenten. Wird auf monofunktionelle Komponenten verzichtet, so kann das Molekulargewicht auch durch eine gezielte Unstöchiometrie der funktionellen Gruppen eingestellt werden. Diese kann beispielsweise durch einen Überschuß an Diol oder Dicarbonsäure realisiert werden. Die erfindungsgemäßen Polymere weisen NMP-Löslichkeit auf, wenn mindestens 3 Mol-%, vorzugsweise mindestens 6 Mol-%, der monofunktionellen Verbindung vorhanden oder aber eine um mindestens 3 Mol-%, vorzugsweise mindestens 6 Mol-%, voneinander abweichende Stöchiometrie in den zur Bildung einer Ester-, Amid- oder Imidbindung befähigten funktionellen Gruppen der das Hauptkettenpolymer bildenden Monomere gewährleistet ist.

Die Camphersäure wird vorzugsweise in einer enantiomerenreinen Form eingesetzt, bevorzugt die natürlich vorkommende (1R, 3S)-(+)-Camphersäure. Bei Verwendung von Enantiomeren- oder Diastereomerengemischen ist darauf zu achten, daß kein racemisches Gemisch eingesetzt wird, sondern ein wirksamer optisch aktiver Überschuß vorhanden ist.

Besonders geeignete Hydroxycarbonsäuren und Aminocarbonsäuren sind beispielsweise m- und p-Hydroxybenzoesäuren, Hydroxynaphthalincarbonsäuren, insbesondere 2-Hydroxy-7-carboxy-naphthalin und 2-Hydroxy-6-carboxy-naphthalin, Hydroxybiphenylcarbonsäuren, insbesondere 4-Hydroxy-4'-carboxy-biphenyl, Hydroxycyclohexancarbonsäure, m- oder p-Aminobenzoesäuren sowie Hydroxyzimtsäuren, wie 3-Hydroxy- oder 4-Hydroxyzimtsäure.

Besonders geeignete Dicarbonsäuren sind beispielsweise Terephthalsäure, Isophthalsäure, 4,4'-Biphenyldicarbonsäuren, Naphthalindicarbonsäuren, insbesondere 2,6- oder 2,7-Naphthalin-dicarbonsäure, Cyclohexandicarbonsäuren, Pyridindicarbonsäuren, insbesondere 2,4- und 2,5-Pyridindicarbonsäure, Diphenyletherdicarbonsäuren sowie Carboxyzimtsäuren.

Besonders geeignete Diole, Aminophenole und Diamine sind Hydrochinon, Resorcin, 4,4'-Dihydroxybiphenyl, 2,6-Naphthalindiol, Dihydroxydiphenylsulfone, Dihydroxydiphenylether, Dihydroxyterphenyle, Dihydroxydiphenylketone, m- und p-Phenylendiamine, Diaminoanthrachinone, Dihydroxyanthrachinone, m- und p-Aminophenol und Aminonaphthol.

Vorzugsweise stehen die funktionellen Gruppen der vorstehend genannten Verbindungen nicht in ortho-Stellung zueinander.

Besonders geeignete monofunktionelle Verbindungen sind Benzoesäure, Phenol, Hydroxybiphenyle, Biphenylcarbonsäuren, Naphthalincarbonsäuren sowie Naphthole.

Insbesondere bevorzugt sind Polymere, enthaltend (1R, 3S)-(+)-Camphersäure sowie p-Hydroxybenzoesäure und/oder 2-Hydroxy-6-naphthoesäure und/oder Terephthalsäure und/oder Isophthalsäure und/oder Hydrochinon und/oder Resorcin und/oder 4,4'-Dihydroxybiphenyl und/oder 2,6-Naphthalindicarbonsäure und gegebenenfalls Benzoesäure.

Die erfindungsgemäß eingesetzten Monomere können entweder direkt eingesetzt werden, oder es können auch zweckmäßige Vorstufen verwendet werden, die sich unter den nachfolgenden Reaktionsbedingungen zu den gewünschten Monomeren umsetzen. So kann beispielsweise statt N-(4-Hydroxyphenyl)trimellitimid Aminophenol und Trimellitsäureanhydrid eingesetzt werden.

Die Polykondensation selbst kann mit üblichen Polykondensationsverfahren durchgeführt werden. Beispielsweise eignet sich die Schmelzkondensation mit Acetanhydrid, bevorzugt bei Temperaturen von 120 bis 350 °C. Bevorzugt erfolgt die Verknüpfung der Monomere über Esterbindungen (Polyester) und/oder über Amidbindungen (Polyesteramid/Polyamid), jedoch kann die Verknüpfung auch über andere dem Fachmann bekannte Verknüpfungsarten erfolgen, beispielsweise Polyesterimid.

Anstelle der Carbonsäuren können auch andere dem Fachmann bekannte Carbonsäurederivate, wie beispielsweise Säurechloride oder Carbonsäureester eingesetzt werden. Anstelle der Hydroxykomponenten können auch entsprechende Hydroxyderivate, wie beispielsweise die acetylierten Hydroxyverbindungen, eingesetzt werden.

Die beschriebenen Polymerbausteine können noch weitere Substituenten, wie beispielsweise Methyl, Methoxy oder Halogen, enthalten.

Es ist auch möglich, die Farbe der erfindungsgemäßen cholesterischen flüssigkristallinen Polymere durch Mischen von farblosen und/oder gefärbten nematischen und/oder cholesterischen flüssigkristallinen Polymeren gezielt zu beeinflussen. Dabei kann der Farbton der Effektbeschichtung in weiten Grenzen variiert und exakt eingestellt werden. Die Herstellung einer solchen Polymermischung erfolgt vorzugsweise durch gemeinsames Lösen.

Als Maß für das Molekulargewicht der erfindungsgemäßen Polymere kann die intrinsische Viskosität der Polymere herangezogen werden. Geeignet sind Polymere mit einer intrinsischen Viskosität zwischen 0,1 dl/g und 1,4 dl/g, vorzugsweise zwischen 0,3 und 1,2 dl/g, insbesondere zwischen 0,4 und 1,0 dl/g bei etwa 35°C. Die Angaben beziehen sich der besseren Vergleichbarkeit wegen auf ein Lösemittelgemisch Pentaflourphenol/Hexaflourisopropanol (50/50 Gew-%) bei einer Konzentration von 1 g/l.

Die erfindungsgemäßen cholesterischen Polymere besitzen eine hohe thermische Stabilität. Sie machen Vernetzungsreaktionen nach dem Aufbringen auf eine Substratoberfläche überflüssig. Dadurch gestaltet sich nicht nur die Applikation, sondern auch die Synthese erheblich einfacher.

Die erfindungsgemäßen Polymere eignen sich insbesondere zur Herstellung cholesterischer Effektbeschichtungen, wofür mehrere Verfahrensweisen möglich sind:

Eine bevorzugte Möglichkeit, die cholesterischen flüssigkristallinen Polymere in Effektbeschichtungen zu überführen, ist die Lösungsbeschichtung. Hierbei wird das Polymer in dem Lösemittel, bevorzugt NMP, gelöst und aus der Lösung ein Film auf das zu beschichtende Substrat aufgebracht. Dies kann beispielsweise durch Spritzen, Rakeln, Gießen, Tauchen oder mit einem Pinsel geschehen. Nach dem Abdampfen des Lösemittels und ggf. einer anschließenden Temperaturbehandlung bildet das Polymer eine brillante Effektbeschichtung.

Zur Herstellung plättchenförmiger Effektpigmente wird die vorstehend beschriebene Beschichtung auf einem planaren Substrat durchgeführt, von dem es wieder abgetrennt werden kann. Dies kann beispielsweise eine Polyimidfolie oder ein beschichtetes Aluminiumband sein. Nach dem Abtrennen des Polymerfilms von dem Substrat werden der Film oder die Filmfragmente mit üblichen Zerkleinerungs- und Trenneinrichtungen in die gewünschte plättchenförmige Geometrie, d.h. ein Plättchendurchmesser, der mindestens zwei- bis dreimal so groß wie die Plättchendicke ist, überführt. Die erhaltenen plättchenförmigen Polymerteilchen eignen sich insbesondere als blickwinkelabhängige Effektpigmente für Lacke, Kosmetik, oder als Druckpigment, beispielsweise für den Sicherheitsdruck oder den dekorativen Verpackungsdruck.

Die erfindungsgemäß hergestellten Effektpigmente können auch in Komponenten für berührungslose Druckverfahren eingesetzt werden, beispielsweise in elektrophotographischen Tonern und Entwicklern und in Ink-Jet-Tinten.

Eine weitere Möglichkeit, die cholesterischen flüssigkristallinen Polymere in Effektbeschichtungen zu überführen, ist die Schmelzbeschichtung. Hierbei wird das Polymer in der Schmelze auf das Substrat aufgezogen oder auf dem Substrat aufgeschmolzen und zu einer dünnen Schicht verarbeitet. Zum Aufbringen des Polymers eignet sich beispielsweise ein beheizbarer Rakel. Der Auftrag kann aber auch mit einfacheren Mitteln, wie beispielsweise einem Spachtel, erfolgen.

Eine weitere Möglichkeit, die cholesterischen flüssigkristallinen Polymere in Effektbeschichtungen zu überführen, ist die Pulverbeschichtung. Hierbei wird das Polymer in einem ersten Schritt mit bekannten Mahlaggregaten auf die gewünschte Kornfeinheit gemahlen. Anschließend wird das Pulver nach bekannten Methoden, wie beispielsweise Flammspritzverfahren, Coronaverfahren, triboelektrisches Verfahren oder Wirbelsinterverfahren appliziert.
Nach dem Auftragprozess auf das Objekt wird die Pulverschicht auf Temperaturen oberhalb des Erweichungspunktes des Pulvers erhitzt, bei welchen die Polymere einen homogenen Film bilden und die helikalen Überstrukturen ausbilden. Die Temperatur, bei welcher die Ausbildung der helikalen Struktur beginnt, wird als Chiralisierungstemperatur bezeichnet.

Die speziellen optischen Eigenschaften der erfindungsgemäßen Effektbeschichtungen werden erst beobachtet, wenn die Moleküle oberhalb der Chiralisierungstemperatur des Polymeren die helikale Struktur ausbilden. Der Übergang in die cholesterische Phase erfolgt in vielen Fällen bereits bei der Synthese der Polymeren. Die Wellenlänge der Selektivreflexion der erfindungsgemäß eingesetzten Polymere wird durch die Ganghöhe der helikalen Struktur bestimmt. Die Ganghöhe ist abhängig von der Struktur des Polymeren, der Schmelzviskosität, der Gegenwart von Lösemitteln und insbesondere von der Verdrillungskraft des chiralen Monomers ("helical twisting power"). Sie ist außerdem eine Funktion der Temperatur. Entsprechend läßt sich die Ganghöhe der Helix auch über die Temperatur einstellen. Durch schnelles Abkühlen der beschichteten Substrate läßt sich die Ganghöhe der Helix und somit die Selektivreflexion dauerhaft eingefrieren. Beim langsamen Abkühlen muß mit coloristischen Veränderungen gerechnet werden. Im allgemeinen werden auch auf diese Weise gefärbte Substrate erhalten. Es ist jedoch schwierig, die Endcoloristik vorherzubestimmen. Wird das abgekühlte Substrat erneut erhitzt, so lassen sich neue oder auch wieder die gleichen Ganghöhen der Helix und somit die Wellenlänge der Selektivreflexion einstellen. Durch diesen Vorgang kann die Coloristik des beschichteten Substrats auf einfache Weise variiert und korrigiert werden. Für die Anwendung in der Praxis ist es wichtig, daß der Schmelzpunkt und die Chiralisierungstemperatur des Polymeren oberhalb der Gebrauchstemperatur des beschichteten Substrats liegen.

Begünstigt werden kann die Ausbildung der helikalen Struktur neben der Temperatur und der Einwirkung von Scherkräften durch Untergründe mit polymeren Schichten, wie beispielsweise Polyvinylalkohol, Cellulosederivate und Polyimide. Der Orientierungsprozess der Polymermoleküle kann je nach Struktur der Polymeren auch durch elektrische und magnetische Felder positiv beeinflußt werden.

Die erfindungsgemäßen Effektbeschichtungen können auf die unterschiedlichsten Substrate aufgebracht werden. Dies können beispielsweise Gegenstände aus natürlichen und synthetischen Materialien wie beispielsweise Holz, Kunststoffe, Papier, Metall oder Glas sein. Wird die Effektbeschichtung ohne eine Vorbeschichtung aufgebracht, so empfiehlt sich ein Auftrag in einer Schichtdicke, die den Untergrund abdeckt. Es können selbstverständlich auch mehrere Schichten aufgetragen oder semitransparente Beschichtungen hergestellt werden. Besonders bevorzugt ist die Beschichtung der Karosserie oder von Karosserieteilen von Kraftfahrzeugen.

Die Effektbeschichtungen können nach üblichen Methoden mit einem Klarlack überzogen werden. Als Klarlack sind grundsätzlich alle bekannten Klarlacke oder transparent pigmentierten Überzugsmittel geeignet. Hierbei können sowohl lösungsmittelhaltige Einkomponenten- oder Zweikomponenten-Lacke sowie vorzugsweise wasserverdünnbare Klarlacke und Pulverlacke eingesetzt werden. In manchen Fällen kann es zweckmäßig sein, die Klarlackschicht etwas dicker zu wählen oder 2 Klarlackschichten aus gleichen oder verschiedenen Flüssigklarlacken oder Pulverklarlacken aufzutragen. Der Klarlack enthält bekannterweise weitere Hilfsstoffe, die die Oberflächeneigenschaften der beschichteten Objekte verbessern. Zu erwähnen sind beispielsweise UV-Stabilisatoren und Lichtschutzmittel, die die darunterliegenden Schichten vor Abbaureaktionen schützen.

Den Effektbeschichtungen können vor oder während der Applikation weitere Stoffe zugesetzt werden, wie sie bei Kunststoffverarbeitungs-, Lackier- und Beschichtungsverfahren üblich sind. Zu erwähnen sind beispielsweise nicht flüssigkristalline Polymere, Ladungssteuermittel, Absorptions- und Interferenzpigmente, Füllstoffe, Haftvermittler, Lichtschutzmittel, Stabilisatoren sowie Stoffe, die die Rheologie und den Verlauf beeinflussen.

Die erfindungsgemäßen Effektbeschichtungen lassen sich mit wenigen einfachen Prozeßschritten in hoher Ausbeute und ohne den Anfall eines nicht wiederverwertbaren Abfalls herstellen. Sie zeichnen sich neben der einfachen Verarbeitbarkeit durch eine hohe Temperaturstabilität und Chemikalienresistenz und sehr brillante Farbtöne mit ausgeprägter Abhängigkeit des Farbeindrucks vom Betrachtungswinkel aus.

### Beispiele

### Beispiel 1

1,02 Mol 2-Hydroxy-6-naphthoesäure, 3 Mol 4-Hydroxy-benzoesäure, 0,78 Mol 4,4'-Dihydroxibiphenyl und 1,2 Mol (1R,3S)-(+)-Camphersäure werden in einem Reaktor mit 6,15 Mol Essigsäureanhydrid sowie 1,1g Kaliumacetat versetzt und mit einem leichten Stickstoffstrom durchspült. Die Mischung wird innerhalb von 15 Minuten auf 150 °C erhitzt und diese Temperatur für 30 Minuten gehalten. Anschließend wird die Temperatur innerhalb von 330 Minuten auf 330 °C erhöht und die Schmelze 80 Minuten bei dieser Temperatur gehalten. Ab ca. 220 °C beginnt Essigsäure abzudestillieren. Danach wird die Stickstoffspülung abgebrochen und Vakuum angelegt. Die Schmelze wird für weitere 30 Minuten unter Vakuum (ca. 5 mbar) gerührt. Anschließend wird das Polymer mit Stickstoff belüftet, abgekühlt und isoliert. Das Polymer zeigt bei senkrechtem Anblick eine brillante türkis-grüne Farbe, die bei schrägem Betrachtungswinkel blau erscheint. Von dem Polymer läßt sich bei Raumtemperatur eine 15 gew.-%ige NMP-Lösung herstellen.

Intrinsische Viskosität: 0,9 dl/g bei 35 °C.

### Beispiel 2

5,1 Mol 2-Hydroxy-6-naphthoesäure, 15 Mol 4-Hydroxy-benzoesäure, 5,7 Mol 4,4'-Dihydroxibiphenyl und 4,2 Mol (1R,3S)-(+)-Camphersäure werden in einem Reaktor mit 30,75 Mol Essigsäureanhydrid sowie 2 g Kaliumacetat versetzt und mit einem leichten Stickstoffstrom durchspült. Die Mischung wird innerhalb von 15 Minuten auf 150 °C erhitzt und diese Temperatur für 115 Minuten gehalten. Anschließend wird die Temperatur innerhalb von 210 Minuten auf 320 °C erhöht und die Schmelze 80 Minuten bei dieser Temperatur gehalten. Ab ca. 220 °C beginnt Essigsäure abzudestillieren. Danach wird die Stickstoffspülung abgebrochen und Vakuum angelegt. Die Schmelze wird für weitere 30 Minuten unter Vakuum (ca. 5 mbar) gerührt. Anschließend wird das Polymer mit Stickstoff belüftet, abgekühlt und isoliert. Das Polymer zeigt bei senkrechtem Anblick eine brillante goldene Farbe, die bei schrägem Betrachtungswinkel grünstichig blau erscheint. Von dem Polymer läßt sich eine 10 gew.-%ige NMP Lösung herstellen.

### Beispiel 3

Eine 10 gew.-%ige Lösung des Polymers aus Beispiel 2 in NMP wird mit einem Spiralrakel (25 µm Spalt) auf einem Träger ausgerakelt. Nach dem Trocknen wird der Film zur Orientierung kurz auf 280 °C erhitzt. Es bildet sich spontan eine sehr brillante Effektbeschichtung aus, die bei senkrechtem Anblick golden, bei schrägem Anblick jedoch grünstichig blau erscheint.

### Beispiel 4

Eine Polymerlösung aus Beispiel 2 wird mit mit einer Sprüheinrichtung auf ein zu beschichtendes Blech gesprüht. Nach dem Trocknen wird das Blech kurz auf 280°C erhitzt und danach auf Raumtemperatur abgekühlt. Das Blech zeigt eine brillante Effektbeschichtung, die bei senkrechtem Anblick golden, bei schrägem Anblick jedoch grünstichig blau erscheint.

## Patentansprüche

1. Cholesterisches flüssigkristallines Hauptkettenpolymer, **dadurch gekennzeichnet, daß** es mindestens 3 Mol % einer monofunktionellen Verbindung oder eine um mindestens 3 Mol % voneinander abweichende Stöchiometrie in den zur Bildung einer Ester-, Amid- oder Imidbindung befähigten funktionellen Gruppen der das Hauptkettenpolymer bildenden Monomere, und 5 bis 17 Mol-% eines optisch aktiven Camphersäurerests enthält.

2. Cholesterisches flüssigkristallines Hauptkettenpolymer nach Anspruch 1, **dadurch gekennzeichnet, daß** 10 bis 15 Mol-% des Camphersäurerests enthalten sind.

3. Cholesterisches flüssigkristallines Hauptkettenpolymer nach Anspruch 1 oder 2, bestehend aus
a) 0 bis 95 Mol-% mindestens einer Verbindung aus der Gruppe der aromatischen Hydroxycarbonsäuren, cycloaliphatischen Hydroxycarbonsäuren und aromatischen Aminocarbonsäuren;
b) 0 bis 49,95 Mol-% mindestens einer Verbindung aus der Gruppe der aromatischen Dicarbonsäuren und cycloaliphatischen Dicarbonsäuren;
c) 0 bis 49,95 Mol-% mindestens einer Verbindung aus der Gruppe der aromatischen Diole, cycloaliphatischen Diole, aromatischen Diamine und aromatischen Hydroxyamine;
d) 5 bis 17 Mol-%, vorzugsweise 10 bis 15 Mol-%, an Camphersäure; und
e) 0 bis 25 Mol-%, vorzugsweise 0 bis 15 Mol-%, einer monofunktionellen Verbindung, wobei die Summe 100 Mol-% ergibt.

4. Cholesterisches flüssigkristallines Hauptkettenpolymer nach mindestens einem der Ansprüche 1 bis 3, bestehend im wesentlichen aus (1 R, 3S)-(+)-Camphersäure, und p-Hydroxybenzoesäure und/oder 2-Hydroxy-6-naphthoesäure und/oder Terephthalsäure und/oder Isophthalsäure und/oder Hydrochinon und/oder Resorcin und/oder 4,4'-Dihydroxybiphenyl und/oder 2,6-Naphthalindicarbonsäure und gegebenenfalls Benzoesäure.

5. Verfahren zur Herstellung eines cholesterischen flüssigkristallinen Hauptkettenpolymers nach mindestens einem der Ansprüche 1 bis 4, **dadurch gekennzeichnet, daß** die Monomere polykondensiert werden, wobei mindestens 3 Mol-%, vorzugsweise mindestens 6 Mol-%, einer monofunktionellen Verbindung vorhanden sind, oder wobei eine um mindestens 3 Mol-%, vorzugsweise um mindestens 6 Mol-%, voneinander abweichende Stöchiometrie in den zur Bildung einer Ester-, Amid- oder Imidbindung befähigten funktionellen Gruppen der das Hauptkettenpolymer bildenden Monomere eingestellt wird.

6. Verwendung eines cholesterischen flüssigkristallinen Hauptkettenpolymers gemäß einem der Ansprüche 1 bis 4 zur Herstellung von Effektpigmenten und Effektbeschichtungen.

7. Effektbeschichtung mit einem vom Betrachtungswinkel abhängigen Farbeindruck, bestehend im wesentlichen aus einem cholesterischen flüssigkristallinen Hauptkettenpolymer nach einem oder mehreren der Ansprüche 1 bis 4.

8. Verfahren zur Herstellung von Effektbeschichtungen nach Anspruch 7, **dadurch gekennzeichnet, daß** das cholesterische flüssigkristalline Hauptkettenpolymer in Form einer Schmelze oder in Lösung oder als Pulver auf das zu beschichtende Objekt aufgebracht und durch Temperaturbehandlung in einen Film mit einem vom Betrachtungswinkel abhängigen Farbeindruck überführt wird.

9. Verfahren nach Anspruch 8, **dadurch gekennzeichnet, daß** das zu beschichtende Objekt die Karosserie oder ein Karosserieteil eines Kraftfahrzeugs ist.

10. Verfahren zur Herstellung eines Effektpigments, **dadurch gekennzeichnet, daß** man auf einem planaren Substrat eine Effektbeschichtung nach Anspruch 8 durchführt, anschließend die Beschichtung wieder abtrennt und mit einer geeigneten Zerkleinerungsvorrichtung in plättchenförmige Teilchen überführt.

## Claims

1. A cholesteric, liquid-crystalline main-chain polymer which contains at least 3 mol% of a monofunctional compound or a stoichiometry which differs by at least 3 mol% from one another in the functional groups which are capable of forming an ester, amide or imide bond in the monomers forming the main-chain polymer, and from 5 to 17 mol% of an optically active camphoric acid radical.

2. A cholesteric, liquid-crystalline main-chain polymer as claimed in claim 1, which contains from 10 to 15 mol% of the camphoric acid radical.

3. A cholesteric, liquid-crystalline main-chain polymer as claimed in claim 1 or 2, consisting of
a) from 0 to 95 mol% of at least one compound from the group consisting of aromatic hydroxycarboxylic acids, cycloaliphatic hydroxycarboxylic acids and aromatic aminocarboxylic acids;
b) from 0 to 49.95 mol% of at least one compound from the group consisting of aromatic dicarboxylic acids and cycloaliphatic dicarboxylic acids;
c) from 0 to 49.95 mol% of at least one compound from the group consisting of aromatic diols, cycloaliphatic diols, aromatic diamines and aromatic hydroxyamines;
d) from 5 to 17 mol%, preferably from 10 to 15 mol%, of camphoric acid; and
e) from 0 to 25 mol%, preferably from 0 to 15 mol%, of a monofunctional compound, where the sum is 100 mol%.

4. A cholesteric, liquid-crystalline main-chain polymer as claimed in at least one of claims 1 to 3, essentially consisting of (1R, 3S)-(+)-camphoric acid and p-hydroxybenzoic acid and/or 2-hydroxy-6-naphthoic acid and/or terephthalic acid and/or isophthalic acid and/or hydroquinone and/or resorcinol and/or 4,4'-dihydroxybiphenyl and/oder 2,6-naphthalenedicarboxylic acid and, if desired, benzoic acid.

5. A process for the preparation of a cholesteric, liquid-crystalline main-chain polymer as claimed in at least one of claims 1 to 4, wherein the monomers are polycondensed, with at least 3 mol%, preferably at least 6 mol%, of a monofunctional compound being present or with a stoichiometry which differs by at least 3 mol%, preferably by at least 6 mol%, from one another being established in the functional groups capable of forming an ester, amide or imide bond in the monomers forming the main-chain polymer.

6. The use of a cholesteric, liquid-crystalline main-chain polymer as claimed in any one of claims 1 to 4 for the preparation of effect pigments and effect coatings.

7. An effect coating having a viewing angle-dependent color impression, essentially consisting of a cholesteric, liquid-crystalline main-chain polymer as claimed in one or more of claims 1 to 4.

8. A process for the production of effect coatings as claimed in claim 7, wherein the cholesteric, liquid-crystalline main-chain polymer is applied in the form of a melt or in solution or as a powder to the object to be coated and converted by heat treatment into a film having a viewing angle-dependent color impression.

9. The process as claimed in claim 8, wherein the object to be coated is the body or a body part of a motor vehicle.

10. A process for the preparation of an effect pigment, wherein an effect coating is produced as claimed in claim 8 on a planar substrate, and the coating is subsequently removed again and converted into platelet-shaped particles using a suitable comminution device.

## Revendications

1. Polymère à chaîne principale mésomorphe cholestérique, **caractérisé en ce qu'**il contient au moins 3 % en moles d'un composé monofonctionnel, ou une stoechiométrie, s'écartant d'au moins 3 % en moles l'un de l'autre, dans les groupes fonctionnels permettant la formation d'une liaison ester, amide ou imide, des monomères formant le polymère à chaîne principale, et de 5 à 17 % en moles d'un résidu optiquement actif d'acide camphorique.

2. Polymère à chaîne principale mésomorphe cholestérique selon la revendication 1, **caractérisé en ce qu'**il contient de 10 à 15 % en moles du résidu de l'acide camphorique.

3. Polymère à chaîne principale mésomorphe cholestérique selon la revendication 1 ou 2, constitué
a) de 0 à 95 % en moles d'au moins un composé du groupe des acides hydroxycarboxyliques aromatiques, des acides hydroxycarboxyliques cycloaliphatiques et des acides aminocarboxyliques aromatiques ;
b) de 0 à 49,95 % en moles d'au moins un composé du groupe des acides dicarboxyliques aromatiques et des acides dicarboxyliques cycloaliphatiques ;
c) de 0 à 49,95 % en moles d'au moins un composé du groupe des diols aromatiques, des diols cycloaliphatiques, des diamines aromatiques et des hydroxyamines aromatiques ;
d) de 5 à 17 % en moles, de préférence de 10 à 15 % en moles, d'acide camphorique ; et
e) de 0 à 25 % en moles, de préférence de 0 à 15 % en moles d'un composé monofonctionnel, le total étant de 100 % en moles.

4. Polymère à chaîne principale mésomorphe cholestérique selon au moins l'une des revendications 1 à 3, constitué pour l'essentiel d'acide (1R,3S)-(+)camphorique et d'acide p-hydroxybenzoïque et/ou d'acide 2-hydroxy-6-naphtoïque et/ou d'acide téréphtalique et/ou d'acide isophtalique et/ou d'hydroquinone et/ou de résorcinol et/ou de 4,4'-dihydroxybiphényle et/ou d'acide 2,6-naphtalènedicarboxylique, et éventuellement d'acide benzoïque.

5. Procédé de préparation d'un polymère à chaîne principale mésomorphe cholestérique selon au moins l'une des revendications 1 à 4, **caractérisé en ce qu'**on polycondense les monomères, en présence d'au moins 3 % en moles, de préférence d'au moins 6 % en moles d'un composé monofonctionnel, ou bien on ajuste, dans les groupes fonctionnels à même de former une liaison ester, amide ou imide des monomères formant le polymère à chaîne principale, une stoechiométrie qui s'écarte d'au moins 3 % en moles et de préférence d'au moins 6 % en moles l'un de l'autre.

6. Utilisation d'un polymère à chaîne principale mésomorphe cholestérique selon l'une des revendications 1 à 4 pour préparer des pigments à effets décoratifs et des revêtements à effets décoratifs.

7. Revêtement à effets décoratifs présentant une impression colorée qui dépend de l'angle d'observation, constitué pour l'essentiel d'un polymère à chaîne principale mésomorphe cholestérique selon l'une ou plusieurs des revendications 1 à 4.

8. Procédé pour fabriquer des revêtements à effets décoratifs selon la revendication 7, **caractérisé en ce que** le polymère à chaîne principale mésomorphe cholestérique est appliqué sous forme d'une masse fondue ou en solution ou sous forme d'une poudre sur l'objet à revêtir, et, par traitement à haute température, est converti en un film donnant une impression colorée qui dépend de l'angle d'observation.

9. Procédé selon la revendication 8, **caractérisé en ce que** l'objet à revêtir est la carrosserie ou une partie de carrosserie d'un véhicule à moteur.

10. Procédé pour fabriquer un pigment à effets décoratifs, **caractérisé en ce qu'**on réalise sur un subjectile plan un revêtement à effets décoratifs selon la revendication 8, puis on sépare de nouveau le revêtement, et, à l'aide d'un équipement approprié de broyage, on le convertit en des particules lamellaires.
